# EUROPEAN PATENT APPLICATION

(11) **EP 3 321 122 A2**
(43) Date of publication of application: **16.05.2018**
(21) Application number: 17201144.7
(22) Date of filing: 10.11.2017
(51) Int. Cl.: B60L 11/18

(54) **CHARGING STATION**

(30) Priority: 11.11.2016 CN 201611005196
(71) Applicant: Optimum Battery Co., Ltd., Shenzhen City, Guangdong 518118 (CN)
(72) Inventor: LI, Jie cheng, Shenzhen City, Guangdong 518118 (CN); WU, Kuan, Shenzhen City, Guangdong 518118 (CN)
(74) Representative: Hillis, Katherine Louise

(57) **Abstract**

The present invention provides a charging station including a first charging device and a second charging device communicated with the first charging device. Each of the first charging device and the second charging device comprises a parallel interface, a charging interface, a first switch, a control module, and a voltage conversion module electrically coupled to the parallel interface through the first switch. The parallel interface of the first charging device is electrically coupled to the parallel interface of the second charging device. When the first switch of the first charging device is turned on by the control module of the first charging device, and the first switch of the second charging device is turned on by the control module of the second charging device, the voltage conversion modules of the first charging device and the second charging device are electrically coupled in parallel.

## Description

### BACKGROUND OF THE INVENTION

### Field of the Invention

This invention relates to a charging station.

### Description of the Related Art

Generally, a charging station includes a plurality of charging piles to charge electric vehicles, and each charging pile has its own power rating. Some electric vehicles can be charged faster, but need a higher charging power. If a power rating of a charging pile is less than a charging power required by an electric vehicle, a charging time of the electric vehicle will be prolonged, which brings inconvenience to a user. Additionally, some of the charging piles in the charging station can supply power, but are idle, which results in a waste of resources.

It is desirable to provide an invention, which can overcome the problems and limitations mentioned above.

### SUMMARY OF THE INVENTION

The present invention is directed to a charging station that substantially obviates one or more of the problems due to limitations and disadvantages of the related art.

In an aspect of the present invention, there is provided a charging station comprising a first charging device and a second charging device communicated with the first charging device. Each of the first charging device and the second charging device comprises a parallel interface, a charging interface, a first switch, a control module, and a voltage conversion module. The control module is electrically coupled to the charging interface and the first switch. The voltage conversion module is electrically coupled to the parallel interface through the first switch. The parallel interface of the first charging device is electrically coupled to the parallel interface of the second charging device. On condition that the control module of the first charging device detects that the charging interface of the first charging device is electrically coupled to a first electric vehicle, and receives a parallel mode signal, the control module of the first charging device transmits a request signal to the second charging device. On condition that the control module of the first charging device receives a permissive signal from the second charging device, the first switch of the first charging device is turned on by the control module of the first charging device, the first switch of the second charging device is turned on by the control module of the second charging device, and the voltage conversion modules of the first charging device and the second charging device are electrically coupled in parallel.

In another aspect of the present invention, there is provided a charging station comprising a first charging device and a second charging device communicated with the first charging device. Each of the first charging device and the second charging device comprises a parallel interface, a charging interface, a first switch, a control module, and a voltage conversion module. The control module is electrically coupled to the charging interface and the first switch. The voltage conversion module is electrically coupled to the parallel interface through the first switch. The parallel interface of the first charging device is electrically coupled to the parallel interface of the second charging device. On condition that the control module of the first charging device detects that the charging interface of the first charging device is electrically coupled to a first electric vehicle, the control module of the first charging device compares a maximum power of the first charging device with a power required by the first electric vehicle for charging. On condition that the maximum power of the first charging device is less than the power required by the first electric vehicle for charging, the control module of the first charging device transmits a request signal to the second charging device. On condition that the control module of the first charging device receives a permissive signal from the second charging device, the first switch of the first charging device is turned on by the control module of the first charging device, the first switch of the second charging device is turned on by the control module of the second charging device, and the voltage conversion modules of the first charging device and the second charging device are electrically coupled in parallel.

It is to be understood that both the foregoing general description and the following detailed description are exemplary and explanatory and are intended to provide further explanations of the invention as claimed.

### BRIEF DESCRIPTION OF THE DRAWINGS

Implementations of the present technology will now be described, by way of example only, with reference to the attached drawings. It may be understood that these drawings are not necessarily drawn to scale, and in no way limit any changes in form and detail that may be made to the described embodiments by one skilled in the art without departing from the spirit and scope of the described embodiments.
FIG. 1 is a block schematic diagram of a charging station provided by one embodiment of the present invention.
FIG. 2 is a block schematic diagram of a charging station provided by another embodiment of the present invention.

### DETAILED DESCRIPTION OF THE PREFERRED EMBODIMENTS

In order to make the purposes, technical solutions, and advantages of the present invention be clearer, the present invention will be further described in detail hereafter with reference to the accompanying drawings and embodiments. However, it will be understood by those of ordinary skill in the art that the embodiments described herein can be practiced without these specific details. In other instances, methods, procedures and components have not been described in detail so as not to obscure the related relevant feature being described. Also, it should be understood that the embodiments described herein are only intended to illustrate but not to limit the present invention.

Several definitions that apply throughout this disclosure will be presented. The term "coupled" is defined as connected, whether directly or indirectly through intervening components, and is not necessarily limited to physical connections. The connection can be such that the objects are permanently connected or releasably connected. The term "comprise", when utilized, means "include, but not necessarily limited to"; it specifically indicates open-ended inclusion or membership in a so-described combination, group, series and the like.

It should be noted that references to "an" or "one" embodiment in this disclosure are not necessarily to the same embodiment, and such references mean "at least one."

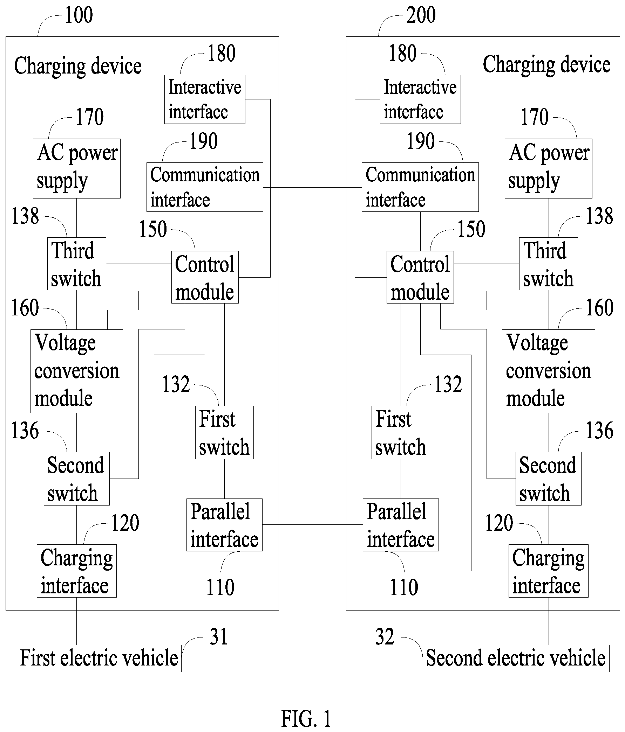

Fig. 1 illustrates a block schematic diagram of a charging station 10 provided by one embodiment of the present invention. The charging station 10 comprises a first charging device 100 and a second charging device 200 communicated with the first charging device 100. Each of the first charging device 100 and the second charging device 200 comprises a parallel interface 110, a charging interface 120, a first switch 132, a control module 150, and a voltage conversion module 160. The control module 150 is electrically coupled to the charging interface 120 and the first switch 132. The voltage conversion module 160 is electrically coupled to the parallel interface 110 through the first switch 132. The parallel interface 110 of the first charging device 100 is electrically coupled to the parallel interface 110 of the second charging device 200.

The control module 150 of the first charging device 100 is configured to detect whether the charging interface 120 of the first charging device 100 is electrically coupled to a first electric vehicle 31. When the control module 150 of the first charging device 100 detects that the charging interface 120 of the first charging device 100 is electrically coupled to the first electric vehicle 31, and receives a parallel mode signal, the control module 150 of the first charging device 100 transmits a request signal to the second charging device 200.

When the second charging device 200 receives the request signal, the control module 150 of the second charging device 200 detects whether the charging interface 120 of the second charging device 200 is electrically coupled to a second electric vehicle 32. When the charging interface 120 of the second charging device 200 is not electrically coupled to the second electric vehicle 32, the control module 150 of the second charging device 200 transmits the permissive signal to the first charging device 100, and controls the first switch 132 of the second charging device 200 to be turned on. When the charging interface 120 of the second charging device 200 is electrically coupled to the second electric vehicle 32, the control module 150 of the second charging device 200 transmits a rejection signal to the first charging device 100, and controls the first switch 132 of the second charging device 200 to be turned off.

When the control module 150 of the first charging device 100 receives the permissive signal from the second charging device 200, the first switch 132 of the first charging device 100 is turned on by the control module 150 of the first charging device 100, and the voltage conversion modules 160 of the first charging device 100 and the second charging device 200 are electrically coupled in parallel.

When the voltage conversion modules 160 of the first charging device 100 and the second charging device 200 are electrically coupled in parallel, and the control module 150 of the second charging device 200 detects that the charging interface 120 of the second charging device 200 is electrically coupled to the second electric vehicle 32, the control module 150 of the second charging device 200 transmits the rejection signal to the first charging device 100, and controls the first switch 132 of the second charging device 200 to be turned off.

In one embodiment, each of the first charging device 100 and the second charging device 200 further comprises a second switch 136 electrically coupled to the charging interface 120, the control module 150, and the voltage conversion module 160. When the voltage conversion modules 160 of the first charging device 100 and the second charging device 200 are electrically coupled in parallel, and the control module 150 of the first charging device 100 receives a charging signal, the control module 150 of the first charging device 100 transmits the charging signal to the control module 150 of the second charging device 200, and controls the second switch 136 of the first charging device 100 to be turned on.

In one embodiment, each of the first charging device 100 and the second charging device 200 further comprises an alternating current (AC) power supply 170 and a third switch 138 electrically coupled to the AC power supply 170, the control module 150, and the voltage conversion module 160. When the control module 150 of the first charging device 100 receives the charging signal, the control module 150 of the first charging device 100 controls the third switch 138 of the first charging device 100 to be turned on, the voltage conversion module 160 of the first charging device 100 is powered by the AC power supply 170 of the first charging device 100. When the control module 150 of the second charging device 200 receives the charging signal, the control module 150 of the second charging device 200 controls the third switch 138 of the second charging device 200 to be turned on, the voltage conversion module 160 of the second charging device 200 is powered by the AC power supply 170 of the second charging device 200. Therefore, the first electric vehicle 31 is charged by the voltage conversion modules 160 of the first charging device 100 and the second charging device 200.

In one embodiment, each of the first charging device 100 and the second charging device 200 further comprises an interactive interface 180 electrically coupled to the control module 150. The interactive interface 180 of the first charging device 100 is configured to display a power required by the first electric vehicle 31 for charging, a maximum power of the first charging device 100, a first dialog box configured to select a parallel mode, and a second dialog box configured to trigger a charging mode. When the parallel mode is selected, the interactive interface 180 of the first charging device 100 transmits the parallel mode signal to the control module 150 of the first charging device 100. When the charging mode is triggered, the interactive interface 180 of the first charging device 100 transmits the charging signal to the control module 150 of the first charging device 100.

It may be understood that, the interactive interface 180 of the first charging device 100 is further configured to display other information, such as a third dialog box configured to indicate a user to pay a fee for charging. When the fee is paid, the second dialog box is displayed, and the charging mode can be triggered. A function of the interactive interface 180 of the second charging device 200 is similar to a function of the interactive interface 180 of the first charging device 100. Each interactive interface 180 can comprise a touch screen.

In one embodiment, the voltage conversion module 160 of the first charging device 100 is electrically coupled to the control module 150 of the first charging device 100, and the voltage conversion module 160 of the second charging device 200 is electrically coupled to the control module 150 of the second charging device 200. When the control module 150 of the first charging device 100 detects that the charging interface 120 of the first charging device 100 is electrically coupled to the first electric vehicle 31, the control module 150 of the first charging device 100 obtains a power required by the first electric vehicle 31 for charging. When the voltage conversion modules 160 of the first charging device 100 and the second charging device 200 are electrically coupled in parallel, the control module 150 of the first charging device 100 is configured to calculate a first output power of the voltage conversion module 160 of the first charging device 100 and a second output power of the voltage conversion module 160 of the second charging device 200, according to the power required by the first electric vehicle 31 for charging, and control the voltage conversion module 160 of the first charging device 100 to output the first output power, and the voltage conversion module 160 of the second charging device 200 to output the second output power.

Each of the first charging device 100 and the second charging device 200 further comprises a communication interface 190 electrically coupled to the control module 150. The communication interface 190 of the first charging device 100 is electrically coupled to the communication interface 190 of the second charging device 200, to enable the control module 150 of the first charging device 100 to communicate with the control module 150 of the second charging device 200.

In one embodiment, each of the voltage conversion module 160 is configured to convert an AC to a direct current. Each of the first switch 132 comprises at least one of a contactor, a relay, an insulated gate bipolar transistor (IGBT), a metal-oxide-semiconductor field-effect transistor (MOSFET), and a bipolar junction transistor (BJT). Each of the second switch 136 comprises at least one of the relay, the IGBT, the MOSFET, and the BJT. Each of the third switch 138 comprises at least one of the relay, the IGBT, the MOSFET, and the BJT.

In one embodiment, when the charging interface 120 of the first charging device 100 is not electrically coupled to the first electric vehicle 31, the first charging device 100 is idle. When the charging interface 120 of the second charging device 200 is not electrically coupled to the second electric vehicle 32, the second charging device 200 is idle.

The operation principle of the charging station 10 provided by one embodiment of the present invention will be described below.

When the control module 150 of the first charging device 100 detects that the charging interface 120 of the first charging device 100 is electrically coupled to the first electric vehicle 31. The control module 150 of the first charging device 100 obtains the maximum power of the first charging device 100 and the power required by the first electric vehicle 31 for charging, and outputs the maximum power of the first charging device 100 and the power required by the first electric vehicle 31 for charging to the interactive interface 180 of the first charging device 100. The interactive interface 180 of the first charging device 100 displays the maximum power of the first charging device 100, the power required by the first electric vehicle 31 for charging, and the first dialog box. The user determines whether to select the parallel mode, according to the maximum power of the first charging device 100 and the power required by the first electric vehicle 31 for charging. It may be appreciated that, the parallel mode can be selected by the user, to achieve a fast charging, when the maximum power of the first charging device 100 is less than the power required by the first electric vehicle 31 for charging.

When the parallel mode is selected, the interactive interface 180 of the first charging device 100 transmits the parallel mode signal to the control module 150 of the first charging device 100. After receiving the parallel mode signal, the control module 150 of the first charging device 100 transmits the request signal to the second charging device 200.

In other embodiments, when the control module 150 of the first charging device 100 detects that the charging interface 120 of the first charging device 100 is electrically coupled to the first electric vehicle 31, the control module 150 of the first charging device 100 obtains the maximum power of the first charging device 100 and the power required by the first electric vehicle 31 for charging, and compares the maximum power of the first charging device 100 with the power required by the first electric vehicle 31 for charging. When the maximum power of the first charging device 100 is less than the power required by the first electric vehicle 31 for charging, the control module 150 of the first charging device 100 transmits the request signal to the second charging device 200. Therefore, the parallel mode signal and the first dialog box can be omitted. It may understood that, the maximum power of the first charging device 100 is a maximum power of the voltage conversion module 160 of the first charging device 100

When the second charging device 200 receives the request signal, the control module 150 of the second charging device 200 detects whether the charging interface 120 of the second charging device 200 is electrically coupled to the second electric vehicle 32. When the charging interface 120 of the second charging device 200 is not electrically coupled to the second electric vehicle 32, the control module 150 of the second charging device 200 transmits the permissive signal to the first charging device 100, and control the first switch 132 of the second charging device 200 to be turned on. When the charging interface 120 of the second charging device 200 is electrically coupled to the second electric vehicle 32, the control module 150 of the second charging device 200 transmits the rejection signal to the first charging device 100, and controls the first switch 132 of the second charging device 200 to be turned off.

When the control module 150 of the first charging device 100 receives the permissive signal from the second charging device 200, the first switch 132 of the first charging device 100 is turned on by the control module 150 of the first charging device 100, and the voltage conversion modules 160 of the first charging device 100 and the second charging device 200 are electrically coupled in parallel.

When the voltage conversion modules 160 of the first charging device 100 and the second charging device 200 are electrically coupled in parallel, and the control module 150 of the second charging device 200 detects that the charging interface 120 of the second charging device 200 is electrically coupled to the second electric vehicle 32, the control module 150 of the second charging device 200 transmits the rejection signal to the first charging device 100, and controls the first switch 132 of the second charging device 200 to be turned off.

When the voltage conversion modules 160 of the first charging device 100 and the second charging device 200 are electrically coupled in parallel, the interactive interface 180 of the first charging device 100 indicates that the parallel mode has been established, to the user. The third dialog box can be displayed on the interactive interface 180 of the first charging device 100, to indicate the user to pay the fee for charging. When the fee is paid, the second dialog box is displayed on the interactive interface 180 of the first charging device 100, and the charging mode can be triggered by the user. When the charging mode is triggered, the interactive interface 180 of the first charging device 100 transmits the charging signal to the control module 150 of the first charging device 100.

When the control module 150 of the first charging device 100 receives the charging signal, the control module 150 of the first charging device 100 transmits the charging signal to the control module 150 of the second charging device 200, and controls the second switch 136 and the third switch 138 of the first charging device 100 to be turned on. When the control module 150 of the second charging device 200 receives the charging signal, the control module 150 of the second charging device 200 controls the third switch 138 of the second charging device 200 to be turned on. The voltage conversion module 160 of the first charging device 100 is powered by the AC power supply 170 of the first charging device 100, the voltage conversion module 160 of the second charging device 200 is powered by the AC power supply 170 of the second charging device 200, and the first electric vehicle 31 is charged by the voltage conversion modules 160 of the first charging device 100 and the second charging device 200. At this moment, a charging power of the first electric vehicle 31 is equal to a sum of an output power of the voltage conversion module 160 of the first charging device 100 and an output power of the voltage conversion module 160 of the second charging device 200, and the first electric vehicle 31 can be charged fast.

It may be appreciated that, when the voltage conversion modules 160 of the first charging device 100 and the second charging device 200 are electrically coupled in parallel, the control module 150 of the first charging device 100 can calculate the first output power of the voltage conversion module 160 of the first charging device 100 and the second output power of the voltage conversion module 160 of the second charging device 200, according to the power required by the first electric vehicle 31 for charging, and control the voltage conversion module 160 of the first charging device 100 to output the first output power, and the voltage conversion module 160 of the second charging device 200 to output the second output power. For example, the power required by the first electric vehicle 31 for charging is 300 watts (W), the control module 150 of the first charging device 100 can control the voltage conversion module 160 of the first charging device 100 to output the first output power as 150W, and the voltage conversion module 160 of the second charging device 200 to output the second output power as 150W.

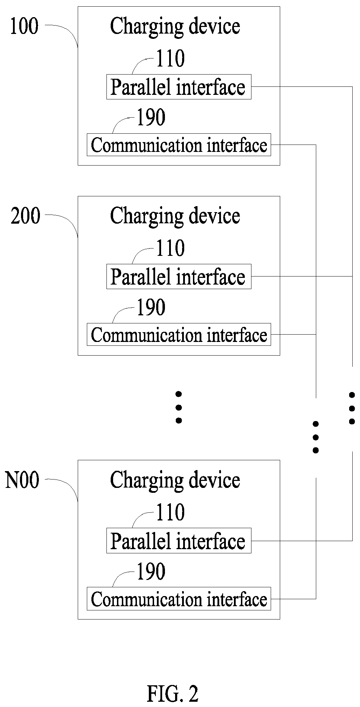

Fig. 2 illustrates a block schematic diagram of a charging station 20 provided by another embodiment of the present invention. The charging station 20 comprises a plurality of charging devices 100-N00 (N is a positive integer, and N is greater than or equal to three). Each charging device comprises a parallel interface 110, a charging interface 120, a first switch 132, a control module 150, and a voltage conversion module 160. The control module 150 is electrically coupled to the charging interface 120 and the first switch 132. The voltage conversion module 160 is electrically coupled to the control module 150, and electrically coupled to the parallel interface 110 through the first switch 132. The parallel interface 110 of each charging device is electrically coupled to the parallel interface 110 of the other charging devices.

Each charging device further comprises a second switch 136 electrically coupled to the charging interface 120, the control module 150, and the voltage conversion module 160. Each charging device further comprises an AC power supply 170 and a third switch 138 electrically coupled to the AC power supply 170, the control module 150, and the voltage conversion module 160. Each charging device further comprises an interactive interface 180 electrically coupled to the control module 150, and a communication interface 190 electrically coupled to the control module 150. The communication interface 190 of each charging device is electrically coupled to the communication interface 190 of the other charging devices, to enable the control module 150 of each charging device to communicate with the control module 150 of the other charging devices. That is, each charging device is similar to the first charging device 100 and the second charging device 200, and an function and an operation principle of each charging device is similar to an function and an operation principle of the first charging device 100 and the second charging device 200.

The control module 150 of each charging device is configured to detect whether the charging interface 120 of each charging device is electrically coupled to an electric vehicle. When the control module 150 of one of the charging devices 100-N00 detects that the charging interface 120 of the one of the charging devices 100-N00 is electrically coupled to the electric vehicle, and receives a parallel mode signal, the control module 150 of the one of the charging devices 100-N00 transmits a request signal to the other charging devices.

When the other charging devices receive the request signal, the control module 150 of each of the other charging devices detects whether the charging interface 120 of each of the other charging devices is electrically coupled to another electric vehicle. When the charging interface 120 of one of the other charging devices is not electrically coupled to the second electric vehicle 32, the control module 150 of the one the other charging devices transmits the permissive signal to the one of the charging devices 100-N00, and control the first switch 132 of the one of the other charging devices to be turned on. When the charging interface 120 of one of the other charging devices is electrically coupled to the second electric vehicle 32, the control module 150 of the one of the other charging devices transmits the rejection signal to the one of the charging devices 100-N00, and controls the first switch 132 of the one of the other charging devices to be turned off.

When the control module 150 of the one of the charging devices 100-N00 receives the permissive signal from the one of the other charging devices, the first switch 132 of the one of the charging devices 100-N00 is turned on by the control module 150 of the one of the charging devices 100-N00, and the voltage conversion modules 160 of the one of the charging devices 100-N00 and the one of the other charging devices are electrically coupled in parallel.

When the voltage conversion modules 160 of the one of the charging devices 100-N00 and the one of the other charging devices are electrically coupled in parallel, and the control module 150 of the one of the other charging devices detects that the charging interface 120 of the one of the other charging devices is electrically coupled to another electric vehicle, the control module 150 of the one of the other charging devices transmits the rejection signal to the one of the charging devices 100-N00, and controls the first switch 132 of the one of the other charging devices to be turned off.

When the voltage conversion modules 160 of the one of the charging devices 100-N00 and the one of the other charging devices are electrically coupled in parallel, and the control module 150 of the one of the charging devices 100-N00 receives the charging signal, the control module 150 of the one of the charging devices 100-N00 transmits the charging signal to the control module 150 of the one of the other charging devices, and controls the second switch 136 and the third switch 138 of the one of the charging devices 100-N00 to be turned on. When the control module 150 of the one of the other charging devices receives the charging signal, the control module 150 of the one of the other charging devices controls the third switch 138 of the one of the other charging devices to be turned on. The voltage conversion module 160 of the one of the charging devices 100-N00 is powered by the AC power supply 170 of the one of the charging devices 100-N00, the voltage conversion module 160 of the one of the other charging devices is powered by the AC power supply 170 of the one of the other charging devices, and the electric vehicle is charged by the voltage conversion modules 160 of the one of the charging devices 100-N00 and the one of the other charging devices. At this moment, a charging power of the electric vehicle is equal to a sum of an output power of the voltage conversion module 160 of the one of the charging devices 100-N00 and an output power of the voltage conversion module 160 of the one of the other charging devices, and the electric vehicle can be charged fast.

For example, when the voltage conversion modules 160 of five charging devices are electrically coupled in parallel, and the output power of the voltage conversion module 160 of each charging device is 100W, the charging power of the electric vehicle is 500W. It may be appreciated that each control module 150 can control a corresponding voltage conversion module 160 to output a corresponding power.

As detailed above, when the control module 150 of one of the charging devices 100-N00 detects that the charging interface 120 of the one of the charging devices 100-N00 is electrically coupled to the electric vehicle, and receives the parallel mode signal, the control module 150 of the one of the charging devices 100-N00 transmits a request signal to the other charging devices; and when the control module 150 of the one of the charging devices 100-N00 receives a permissive signal from one of the other charging devices, the first switch 132 of the one of the charging devices 100-N00 is turned on by the control module 150 of the one of the charging devices 100-N00, the first switch 132 of the one of the other charging devices is turned on by the control module 150 of the one of the other charging devices, and the voltage conversion modules 160 of the one of the charging devices 100-N00 and the one of the other charging devices are electrically coupled in parallel. Therefore, the electric vehicle can be powered by the voltage conversion modules 160 of the one of the charging devices 100-N00 and the one of the other charging devices, a power required by the electric vehicle for charging can be meet, idle charging devices can be used, and a resource utilization of the charging station 10 can be improved.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. A charging station (10), comprising:
a first charging device (100) and a second charging device (200) communicated with the first charging device (100), each of the first charging device (100) and the second charging device (200) comprising:
a parallel interface (110);
a charging interface (120);
a first switch (132);
a control module (150) electrically coupled to the charging interface (120) and the first switch (132); and
a voltage conversion module (160) electrically coupled to the parallel interface (110) through the first switch (132);
wherein the parallel interface (110) of the first charging device (100) is electrically coupled to the parallel interface (110) of the second charging device (200);
wherein on condition that the control module (150) of the first charging device (100) detects that the charging interface (120) of the first charging device (100) is electrically coupled to a first electric vehicle (31), and receives a parallel mode signal, the control module (150) of the first charging device (100) transmits a request signal to the second charging device (200); and
wherein on condition that the control module (150) of the first charging device (100) receives a permissive signal from the second charging device (200), the first switch (132) of the first charging device (100) is turned on by the control module (150) of the first charging device (100), the first switch (132) of the second charging device (200) is turned on by the control module (150) of the second charging device (200), and the voltage conversion modules (160) of the first charging device (100) and the second charging device (200) are electrically coupled in parallel.

2. The charging station (10) of claim 1, wherein on condition that the second charging device (200) receives the request signal, the control module (150) of the second charging device (200) detects whether the charging interface (120) of the second charging device (200) is electrically coupled to a second electric vehicle (32); on condition that the charging interface (120) of the second charging device (200) is not electrically coupled to the second electric vehicle (32), the control module (150) of the second charging device (200) transmits the permissive signal to the first charging device (100), and controls the first switch (132) of the second charging device (200) to be turned on; and on condition that the charging interface (120) of the second charging device (200) is electrically coupled to the second electric vehicle (32), the control module (150) of the second charging device (200) transmits a rejection signal to the first charging device (100), and controls the first switch (132) of the second charging device (200) to be turned off.

3. The charging station (10) of claim 2, wherein on condition that the voltage conversion modules (160) of the first charging device (100) and the second charging device (200) are electrically coupled in parallel, and the control module (150) of the second charging device (200) detects that the charging interface (120) of the second charging device (200) is electrically coupled to the second electric vehicle (32), the control module (150) of the second charging device (200) transmits the rejection signal to the first charging device (100), and controls the first switch (132) of the second charging device (200) to be turned off.

4. The charging station (10) of claim 1, wherein each of the first charging device (100) and the second charging device (200) further comprises a second switch (136) electrically coupled to the charging interface (120), the control module (150), and the voltage conversion module (160); on condition that the voltage conversion modules (160) of the first charging device (100) and the second charging device (200) are electrically coupled in parallel, and the control module (150) of the first charging device (100) receives a charging signal, the control module (150) of the first charging device (100) transmits the charging signal to the control module (150) of the second charging device (200), and controls the second switch (136) of the first charging device (100) to be turned on.

5. The charging station (10) of claim 4, wherein each of the first charging device (100) and the second charging device (200) further comprises:
an alternating current (AC) power supply (170); and
a third switch (138) electrically coupled to the AC power supply (170), the control module (150), and the voltage conversion module (160);
wherein on condition that the control module (150) of the first charging device (100) receives the charging signal, the control module (150) of the first charging device (100) controls the third switch (138) of the first charging device (100) to be turned on, the voltage conversion module (160) of the first charging device (100) is powered by the AC power supply (170) of the first charging device (100);
wherein on condition that the control module (150) of the second charging device (200) receives the charging signal, the control module (150) of the second charging device (200) controls the third switch (138) of the second charging device (200) to be turned on, the voltage conversion module (160) of the second charging device (200) is powered by the AC power supply (170) of the second charging device (200); and
wherein the first electric vehicle (31) is charged by the voltage conversion modules (160) of the first charging device (100) and the second charging device (200).

6. The charging station (10) of claim 5, wherein each of the first charging device (100) and the second charging device (200) further comprises an interactive interface (180) electrically coupled to the control module (150); the interactive interface (180) of the first charging device (100) is configured to display a power required by the first electric vehicle (31) for charging, a maximum power of the first charging device (100), a first dialog box configured to select a parallel mode, and a second dialog box configured to trigger a charging mode; on condition that the parallel mode is selected, the interactive interface (180) of the first charging device (100) transmits the parallel mode signal to the control module (150) of the first charging device (100); and on condition that the charging mode is triggered, the interactive interface (180) of the first charging device (100) transmits the charging signal to the control module (150) of the first charging device (100).

7. The charging station (10) of claim 5, wherein each third switch (138) comprises at least one of a contactor, a relay, an insulated gate bipolar transistor, a metal-oxide-semiconductor field-effect transistor, and a bipolar junction transistor.

8. The charging station (10) of claim 1, wherein the voltage conversion module (160) of the first charging device (100) is electrically coupled to the control module (150) of the first charging device (100), and the voltage conversion module (160) of the second charging device (200) is electrically coupled to the control module (150) of the second charging device (200); on condition that the voltage conversion modules (160) of the first charging device (100) and the second charging device (200) are electrically coupled in parallel, the control module (150) of the first charging device (100) is configured to calculate a first output power of the voltage conversion module (160) of the first charging device (100) and a second output power of the voltage conversion module (160) of the second charging device (200), according to a power required by the first electric vehicle (31) for charging, and control the voltage conversion module (160) of the first charging device (100) to output the first output power, and the voltage conversion module (160) of the second charging device (200) to output the second output power.

9. The charging station (10) of claim 1, wherein each of the first switch (132) comprises at least one of a contactor, a relay, an insulated gate bipolar transistor, a metal-oxide-semiconductor field-effect transistor, and a bipolar junction transistor.

10. The charging station (10) of claim 1, wherein each of the second switch (136) comprises at least one of a contactor, a relay, an insulated gate bipolar transistor, a metal-oxide-semiconductor field-effect transistor, and a bipolar junction transistor.

11. A charging station (10), comprising:
a first charging device (100) and a second charging device (200) communicated with the first charging device (100), each of the first charging device (100) and the second charging device (200) comprising:
a parallel interface (110);
a charging interface (120);
a first switch (132);
a control module (150) electrically coupled to the charging interface (120) and the first switch (132); and
a voltage conversion module (160) electrically coupled to the parallel interface (110) through the first switch (132);
wherein the parallel interface (110) of the first charging device (100) is electrically coupled to the parallel interface (110) of the second charging device (200);
wherein on condition that the control module (150) of the first charging device (100) detects that the charging interface (120) of the first charging device (100) is electrically coupled to a first electric vehicle (31), the control module (150) of the first charging device (100) compares a maximum power of the first charging device (100) with a power required by the first electric vehicle (31) for charging;
wherein on condition that the maximum power of the first charging device (100) is less than the power required by the first electric vehicle (31) for charging, the control module (150) of the first charging device (100) transmits a request signal to the second charging device (200); and
wherein on condition that the control module (150) of the first charging device (100) receives a permissive signal from the second charging device (200), the first switch (132) of the first charging device (100) is turned on by the control module (150) of the first charging device (100), the first switch (132) of the second charging device (200) is turned on by the control module (150) of the second charging device (200), and the voltage conversion modules (160) of the first charging device (100) and the second charging device (200) are electrically coupled in parallel.

12. The charging station (10) of claim 11, wherein on condition that the second charging device (200) receives the request signal, the control module (150) of the second charging device (200) detects whether the charging interface (120) of the second charging device (200) is electrically coupled to a second electric vehicle (32); on condition that the charging interface (120) of the second charging device (200) is not electrically coupled to the second electric vehicle (32), the control module (150) of the second charging device (200) transmits the permissive signal to the first charging device (100), and controls the first switch (132) of the second charging device (200) to be turned on; and on condition that the charging interface (120) of the second charging device (200) is electrically coupled to the second electric vehicle (32), the control module (150) of the second charging device (200) transmits a rejection signal to the first charging device (100), and controls the first switch (132) of the second charging device (200) to be turned off.

13. The charging station (10) of claim 12, wherein on condition that the voltage conversion modules (160) of the first charging device (100) and the second charging device (200) are electrically coupled in parallel, and the control module (150) of the second charging device (200) detects that the charging interface (120) of the second charging device (200) is electrically coupled to the second electric vehicle (32), the control module (150) of the second charging device (200) transmits the rejection signal to the first charging device (100), and controls the first switch (132) of the second charging device (200) to be turned off.

14. The charging station (10) of claim 11, wherein each of the first charging device (100) and the second charging device (200) further comprises a second switch (136) electrically coupled to the charging interface (120), the control module (150), and the voltage conversion module (160); on condition that the voltage conversion modules (160) of the first charging device (100) and the second charging device (200) are electrically coupled in parallel, and the control module (150) of the first charging device (100) receives a charging signal, the control module (150) of the first charging device (100) transmits the charging signal to the control module (150) of the second charging device (200), and controls the second switch (136) of the first charging device (100) to be turned on.

15. The charging station (10) of claim 14, wherein each of the first charging device (100) and the second charging device (200) further comprises:
an alternating current (AC) power supply (170); and
a third switch (138) electrically coupled to the AC power supply (170), the control module (150), and the voltage conversion module (160);
wherein on condition that the control module (150) of the first charging device (100) receives the charging signal, the control module (150) of the first charging device (100) controls the third switch (138) of the first charging device (100) to be turned on, the voltage conversion module (160) of the first charging device (100) is powered by the AC power supply (170) of the first charging device (100);
wherein on condition that the control module (150) of the second charging device (200) receives the charging signal, the control module (150) of the second charging device (200) controls the third switch (138) of the second charging device (200) to be turned on, the voltage conversion module (160) of the second charging device (200) is powered by the AC power supply (170) of the second charging device (200); and
wherein the first electric vehicle (31) is charged by the voltage conversion modules (160) of the first charging device (100) and the second charging device (200).

16. The charging station (10) of claim 15, wherein each of the first charging device (100) and the second charging device (200) further comprises an interactive interface (180) electrically coupled to the control module (150); the interactive interface (180) of the first charging device (100) is configured to display a first dialog box configured to indicate a user to pay a fee for charging, and a second dialog box configured to trigger a charging mode; on condition that the fee is paid, the second dialog box is displayed, and the charging mode is triggered; and on condition that the charging mode is triggered, the interactive interface (180) of the first charging device (100) transmits the charging signal to the control module (150) of the first charging device (100).

17. The charging station (10) of claim 15, wherein each third switch (138) comprises at least one of a contactor, a relay, an insulated gate bipolar transistor, a metal-oxide-semiconductor field-effect transistor, and a bipolar junction transistor.

18. The charging station (10) of claim 11, wherein the voltage conversion module (160) of the first charging device (100) is electrically coupled to the control module (150) of the first charging device (100), and the voltage conversion module (160) of the second charging device (200) is electrically coupled to the control module (150) of the second charging device (200); on condition that the voltage conversion modules (160) of the first charging device (100) and the second charging device (200) are electrically coupled in parallel, the control module (150) of the first charging device (100) is configured to calculate a first output power of the voltage conversion module (160) of the first charging device (100) and a second output power of the voltage conversion module (160) of the second charging device (200), according to the power required by the first electric vehicle (31) for charging, and control the voltage conversion module (160) of the first charging device (100) to output the first output power, and the voltage conversion module (160) of the second charging device (200) to output the second output power.

19. The charging station (10) of claim 11, wherein each of the first switch (132) comprises at least one of a contactor, a relay, an insulated gate bipolar transistor, a metal-oxide-semiconductor field-effect transistor, and a bipolar junction transistor.

20. The charging station (10) of claim 11, wherein each of the second switch (136) comprises at least one of a contactor, a relay, an insulated gate bipolar transistor, a metal-oxide-semiconductor field-effect transistor, and a bipolar junction transistor.
